# EUROPEAN PATENT APPLICATION

(11) **EP 2 157 776 A1**
(43) Date of publication of application: **24.02.2010**
(21) Application number: 09168005.8
(22) Date of filing: 17.08.2009
(51) Int. Cl.: H04N 1/00, H04N 1/23, H04N 1/44

(54) **Image forming apparatus and resource saving mode control method thereof**

(30) Priority: 22.08.2008 KR 20080082480; 29.07.2009 KR 20090069387
(71) Applicant: SAMSUNG ELECTRONICS CO., LTD., Suwon-si, Gyeonggi-do (KR)
(72) Inventor: Jung, Eun-young, Gyeonggi-do (KR); Kim, Eui-young, Gyeonggi-do (KR); Suh, Jung-hyun, Seoul (KR); Kim, Yong-im, Seoul (KR); Endoh, Tomoaki, Gyeonggi-do (KR)
(74) Representative: Walaski, Jan Filip

(57) **Abstract**

An image forming apparatus that saves resources supports a resource saving mode which has at least one function, includes a button to select the resource saving mode; a storage unit to store a preset function which is applied when the resource saving mode is selected; and a controller to execute the resource saving mode by applying the preset function to a corresponding job when the button is pressed, wherein the preset function is set by default or editable. Hence, resources may be saved while simultaneously increasing the convenience to the user.

## Description

Aspects of the present invention relate to an image forming apparatus for saving resources and a method for controlling a resource saving mode thereof. More particularly, aspects of the present invention relate to an image forming apparatus to implement a resource saving mode via a button and a control method thereof.

Given the wide use of computers, the need of computer peripherals is increasing. Representative examples of the computer peripherals include image forming apparatuses, such as printers, scanner, copiers, and multi-functional devices, which combine at least two functions of the printer, the scanner, and the copier.

To print an image on paper, the image forming apparatuses require ink or toner, paper, energy, and so forth. Recently, various methods have been suggested to save the ink or the toner, the paper, and the energy. In particular, an image forming apparatus for business use, as opposed personal use, is used by a plurality of users and subject to considerable waste of the ink or toner, the paper, and the energy. To address this waste, a printing property is set to recycle the paper or print on unprinted sides of the paper (i.e., duplex printing), or a power saving mode is entered after a certain time passes.

However, such suggested methods require cumbersome operations from the user to set/change the printing properties in person, or such suggested methods may not be effective from lack of requirement to input resource saving commands. Therefore, a method for saving the resources under proper compulsion while providing convenience to the user is needed.

Aspects of the present invention provide an image forming apparatus to implement a resource saving mode via a button and a control method of the image forming apparatus. Additional aspects and/or advantages of the invention will be set forth in part in the description which follows and, in part, will be obvious from the description, or may be learned by practice of the invention.

According to an aspect of the present invention, an image forming apparatus to support a resource saving mode, includes: a button to select the resource saving mode; a storage unit to store a preset function applied when the resource saving mode is selected; and a controller to execute the resource saving mode by applying the preset function to a corresponding job when the button is pressed, wherein the preset function is set as default or editable.

According to an aspect of the present invention, the image forming apparatus may further include a function button to select a preset function list, and the controller may display the preset function list when the function button is pressed.

According to an aspect of the present invention, the preset function may include at least one of a print option, a scan option, a copy option, and a fax option.

According to an aspect of the present invention, an attribute value applied to at least one sub-option of the preset function may be set by default.

According to an aspect of the present invention, when the attribute value applied to the at least one sub-option is changed by a user, the changed value may have priority over the default value in a corresponding job.

According to an aspect of the present invention, if a password is set for the resource saving mode, the controller may authenticate the password and execute the resource saving mode according to a result of authentication.

According to an aspect of the present invention, the password may be set for each preset function applied in the resource saving mode or each sub-option of the preset function.

According to an aspect of the present invention, the execution of the resource saving mode according to a result of authentication may be applied to at least one preset function or at least one sub-option of the preset function for which the same password as the input password is set.

According to an aspect of the present invention, the image forming apparatus may further include a user interface (UI), and the password may be input through the UI or received from a host device.

According to an aspect of the present invention, a preset function control method of an image forming apparatus which supports a resource saving mode including at least one function, includes: pressing a button to select the resource saving mode; and when the button is pressed, executing the resource saving mode by applying a preset function to a corresponding job, wherein the preset function is set as default or editable.

According to an aspect of the present invention, the button may be disposed in either the image forming apparatus or a host device connected to the image forming apparatus.

According to an aspect of the present invention, the preset function control method may further include pressing a function button to select a preset function list; and when the function button is pressed, displaying the preset function list.

According to an aspect of the present invention, the preset function may include at least one of a print option, a scan option, a copy option, and a fax option.

According to an aspect of the present invention, an attribute value applied to at least one sub-option of the preset function may be set by default.

According to an aspect of the present invention, when the attribute value applied to the at least one sub-option is changed by a user, the changed value may have priority over the default value in a corresponding job.

According to an aspect of the present invention, the preset function control method may further include setting a password for the resource saving mode, authenticating an input password, and executing the resource saving mode according to a result of authentication.

According to an aspect of the present invention, the password may be set for each preset function applied in the resource saving mode or each sub-option of the preset function.

According to an aspect of the present invention, the execution of the resource saving mode according to the result of authentication may be applied to at least one preset function or at least one sub-option of the preset function for which the same password as the input password is set.

According to an aspect of the present invention, the password may be input through a user interface (UI) of the image forming apparatus or received from a host device.

According to an aspect of the present invention, if a user authenticating function is set separately from a password setting function for the resource saving mode, password authentication for the resource saving mode may be omitted when user authentication is established.

Accordingly, the resource utilized in the job of the image forming apparatus can be saved and user's convenience can be improved.

Additional and/or other aspects and advantages of the invention will be set forth in part in the description which follows and, in part, will be obvious from the description, or may be learned by practice of the invention.

These and/or other aspects and advantages of the invention will become apparent and more readily appreciated from the following description of exemplary embodiments, taken in conjunction with the accompanying drawings of which:
FIG. 1 is a block diagram of an image forming apparatus according to an exemplary embodiment of the present invention;
FIG. 2 is a block diagram of an image forming apparatus according to another exemplary embodiment of the present invention;
FIG. 3 is a block diagram of a resource saving system according to an exemplary embodiment of the present invention;
FIGS. 4A and 4B are views of the image forming apparatus shown in FIGS. 1 to 3;
FIG. 5 is a view of an example of sub-options of a preset function applied when the resource saving mode is selected;
FIGS. 6A to 6C are views to explain a method for setting a password for a resource saving mode according to an exemplary embodiment of the present invention;
FIGS. 7A and 7B are views to explain a method for removing the password which is set for the resource saving mode;
FIG. 8 is a view to explain a method for setting a password for a resource saving mode according to another exemplary embodiment of the present invention;
FIGS. 9A and 9B are views to explain a method for removing a password when the same password is set for at least two functions or sub-options;
FIG. 10 is a diagram showing a feedback effect according to an exemplary embodiment of the present invention;
FIG. 11 is a flowchart showing a resource saving mode control method of the image forming apparatus according to an exemplary embodiment of the present invention; and
FIG. 12 is a flowchart showing a resource saving mode control method of the image forming apparatus according to another exemplary embodiment of the present invention.

Reference will now be made in detail to exemplary embodiments of the present invention, examples of which are illustrated in the accompanying drawings, wherein like reference numerals refer to like elements throughout. Such exemplary embodiments are described below in order to explain the aspects of the present invention with reference to the figures.

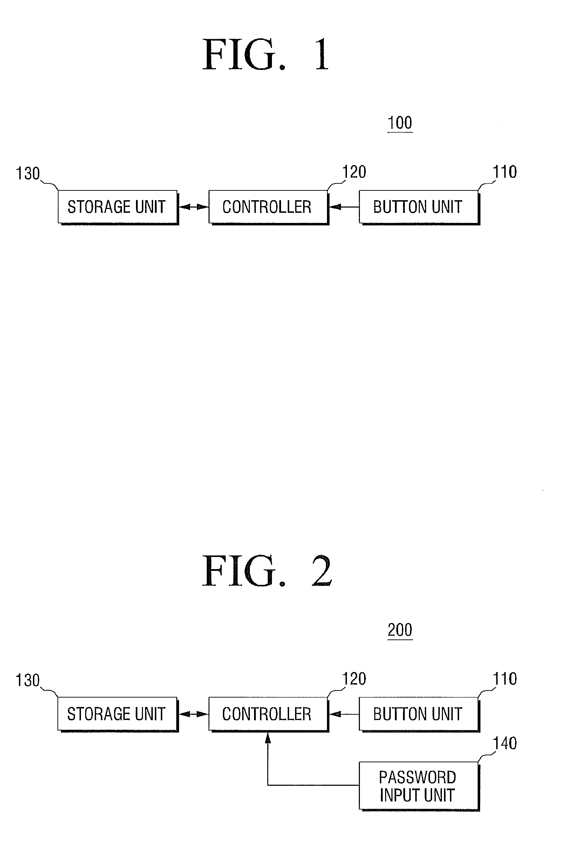

FIG. 1 is a block diagram of an image forming apparatus 100 according to an exemplary embodiment of the present invention. The image forming apparatus 100 of FIG. 1 includes a button unit 110, a controller 120, and a storage unit 130.

The image forming apparatus 100 may be a printer, a scanner, a copier, a fax machine, or a multi-function device, which combines at least two of the printer, the scanner, the copier, and the fax machine.

The button unit 110 is used to select a resource saving mode. That is, when the button unit 110 is selected, a resource saving mode is applied to a corresponding job. The button unit 110 can be realized as a single button and may be a hard button (i.e., an actual physical button) or a soft button (i.e., a button displayed on a touch panel) in or on an outer surface of the image forming apparatus 100. Hence, a user's convenience can be attained by applying the resource saving mode to the corresponding job via the single button.

The button unit 110 may include a Light Emitting Diode (LED) for visual representation of the resource saving mode. The LED can visually represent whether the image forming apparatus 100 is in resource saving mode by lighting, flickering, or producing different colors.

The storage unit 120 stores a preset function applied when the resource saving mode is selected. The storage unit 120 may contain sub-options (e.g., toner save option) corresponding to the preset function (e.g., the print option), and relevant attribute values therefor (e.g., output density level).

The storage unit 120 can be implemented using a Read Only Memory (ROM), a Random Access Memory (RAM), and so forth. The ROM, which is a nonvolatile memory element, contains a test routine of the image forming apparatus 100 and an operation signal required to start the image forming apparatus 100. The ROM can contain commands of the controller 130 to operate the image forming apparatus 100. The RAM, which is a volatile memory element, may be a Dynamic RAM (RAM which periodically requires a charge supply to store data) for temporarily storing information to print. The RAM can include a storage buffer (not shown), a line print buffer (not shown), and a work area.

The controller 130 controls the elements of the image forming apparatus 100 according to programs stored to the storage unit 120. Particularly, when the button of the button unit 110 is pressed, the controller 130 enters the resource saving mode by applying the preset function of the storage unit 120 to the corresponding job. Namely, the controller 130 can execute the resource saving mode by controlling the elements of the image forming apparatus 100 corresponding to the preset function. Herein, the preset function can be at least one of a print option, a scan option, a copy option, and a fax option. The following descriptions center on a case in which the preset function is the print option so as to ease understanding.

Although the button for selecting the resource saving mode is described as being disposed on the image forming apparatus 100, the button may be installed in a host device (not shown) connected to the image forming apparatus 100. In such case, the resource saving mode can be controlled through a printer driver (not shown) or an application (not shown) of the host device (not shown).

FIG. 2 is a block diagram of an image forming apparatus according to another exemplary embodiment of the present invention. The image forming apparatus 200 of FIG. 2 includes a button unit 110, a controller 120, a storage unit 130, and a password input unit 140. Explanations of the elements similar to those in FIG. 1 shall be omitted hereafter.

If a password is set for the entire resource saving mode, each function, or each sub-option, the controller 120 authenticates the password to control whether to apply the resource saving mode or not. Also, if a password is set for the resource saving mode in the image forming apparatus itself, the controller 120 controls the elements relating to the password setting.

The password input unit 140 receives a password to set or disable the resource saving mode. The password input unit 140 may be implemented by a plurality of number keys, for example. However, in some cases, the password input unit 140 may be implemented by a plurality of character keys, a card key insertion unit, or a fingerprint identification unit but aspects are not limited thereto. That is, the image forming apparatus 200 of FIG. 2 has a password setting function or a password inputting function in addition to the functions of the image forming apparatus 100 of FIG. 1.

For example, if the resource saving mode is required to be applied to print jobs by an administrator, that is, if the resource saving mode is set by default, the administrator sets a password for the resource saving mode so that only a user who authenticates the password is authorized to disable the resource saving mode.

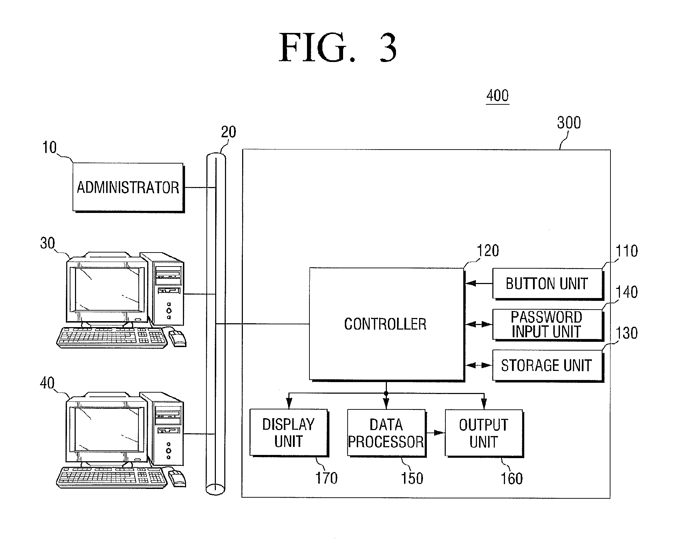

FIG. 3 is a block diagram of a resource saving system according to another exemplary embodiment of the present invention. The resource saving system 400 includes the image forming apparatus 300, an administrator 10, a network 20, and host devices 30 and 40. Explanations of the elements similar to those in FIGS. 1 and 2 shall be omitted hereafter.

The image forming apparatus 300 includes a button unit 110, a controller 120, a storage unit 130, a password input unit 140, a data processor 150, an output unit 160, and a display unit 170. The image forming apparatus 300 is connectable to the administrator 10 and the host devices 30 and 40 via the network 20. Herein, the network 20 can be implemented as a Local Area Network (LAN), a Wide Area Network (WAN), and/or the internet, and the network 20 may be wired or wireless.

In FIG. 3, the connection is established over, but not limited to, the network 20. Note that such connections can be made through a local interface. The data processor 150 converts print data to image data. The output unit 160 prints the image data processed by the data processor 150 onto a recording medium. For example, in a laser image forming apparatus, an Organic Photo Conductor (OPC) surface (not shown) is charged by a charging unit (not shown) and a latent image is formed on the charged surface by a Laser Scanning Unit (LSU). When a developing unit (not shown) develops the image, the toner is attached to the latent image and transferred onto the paper by the transfer unit (not shown). The transferred toner is fixed on the paper by a fixing unit (not shown).

The controller 120 controls the data processor 150 and the output unit 160 to perform the above-mentioned functions. The display unit 170 displays a menu screen according to various functions of the image forming apparatus 300. The display unit 170 may be a Liquid Crystal Display (LCD). In some cases, the display unit 170 may be a Cathode Ray Tube (CRT), a Plasma Display Panel (PDP), an Organic LED (OLED), and so on. The display unit 170 can be formed integrally with the button unit 110 as a touch screen.

The button unit 110 can further include a function button (not shown) for selecting a preset function list. When the function button (not shown) is selected, the controller 120 controls the display unit 170 to display the preset function list. The function button may be implemented as a menu displayed on the display unit 170. Herein, the preset function list can be edited by the user through at least one of the user interface (not shown) of the image forming apparatus 300 and the printer driver or the application of the host devices 30 and 40. That is, the user can change the print option preset in the resource saving mode, to the fax option via the user interface (not shown) or the host devices 30 and 40.

The user interface (not shown) including the button unit 110 is connected to the controller 130 to provide a user interface to manipulate the image forming apparatus 300.

When the preset function applied to a corresponding job upon selecting the resource saving mode through the button unit 110 is the print option, the print option can include various sub-options under a paper save category, a toner save category, and an energy save category. Hence, without setting each sub-option, the resource saving mode can be applied to the corresponding job with the single button, thus providing convenience to a user.

The various sub-options of the paper save category, the toner save category, and the energy save category include, for example, at least one of a double-sided print option, multiple pages per side print option, a black and white print option, a toner save option, a batch output option, a blank page delete option, a landscape delete option, and an auto power on/off option. The sub-options can be set by default by a manufacturer of the image forming apparatus 300 and/or be upgraded using a program. Herein, the batch printing collects and produces the print jobs at one time. When the print job includes an empty page, the blank page delete printing option automatically deletes the empty page. The other sub-options are well known in the art and description thereof shall be omitted here.

The sub-options of the preset function applied when the resource saving mode is selected, can be applied or not by the user or the administrator 10. Herein, the administrator 10 can be a network administrator, such as a company or a user. The administrator 10 properly combines and applies the various sub-options over the network 20, thus providing convenience to the user and saving the resources.

For example, when the double sided print option and the option for printing two pages per page are applied at the same time, four sheets of paper can be printed in a single sheet of paper. As a result, three sheets of paper can be saved. The energy can be also saved using the batch output option which collects and outputs the print jobs at one time.

The user or the administrator 10 can apply only one of the double sided print option, the multiple pages per side print option, the black and white print option, and the toner save options of the various sub options, and not to apply the other options.

User access to the sub-options can be set or changed by the administrator 10. For example, among the doubled sided print option, the multiple pages per side print option, the black and white print option, and the toner save option, the administrator 10 can, for example, set not to allow the user access to the black and white print option, and set to allow the user to change whether to apply the other options. Consequently, the black and white print option can be forced upon every user of the image forming apparatus 300.

The attribute value applied to at least one sub-option can be set by default. For example, the output density level can be set by default in the toner save option, and the number of pages per side can be set by default in the multiple pages per side print option. The administrator 10 can restrict the setting and/or the alteration of the attribute values of the options. When the administrator 10 allows the user access to a certain sub-option and the attribute value for the accessible sub-option is changed by the user, the changed value has priority over the default value in the corresponding job.

The host devices 30 and 40 may display the sub-option of the preset function applied when the resource saving mode is selected or the resource save percentage (%) so that the user can perceive it. Alternatively, the display unit 170 of the image forming apparatus 300 can display the sub-option or the resource save percentage.

The administrator 10 may set the resource saving mode as default and/or may set a password for the button unit 110 to apply the resource saving mode, so that the resource saving mode set as default can be disabled only when the password is authenticated. The administrator 10 may set a separate password for each preset function which is applied when the resource saving mode is selected. Also, the administrator 10 may set a separate password for each sub-option of the preset function applied when the resource saving mode is selected.

Further, the administrator 10 may group some of the preset functions applied when the resource saving mode is selected or some of the sub-options, and set the same password for the same group. For example, the black and white print option and the toner save option may be grouped into the same group and allocated a single password. Alternatively, the same password may be allocated to each option such that the same password is set for two options.

If the administrator 10 sets a password for the button unit 110, that is, for the entire resource saving mode, the user cannot change a setting value for each function and sub-option set by the administrator 10 and should input the password set by the user for authentication to disable the resource saving mode or change the setting value. Also, if the administrator 10 sets a separate password for each preset function applied when the resource saving mode is selected or each sub-option of the function, the user should input the separate password for each function or sub-option for authentication.

Further, if the administrator 10 sets the same password for some of the preset functions applied when the resource save mode is selected or some of the sub-options, the preset functions or the sub-options which are allocated the same password are disabled at the same time when the user inputs the password.

The password may be set by the administrator 10 through a network server or an embedded web-server, or may be set through the image forming apparatus 300. For example, in order to set the password through the image forming apparatus 300, the administrator 10 should complete an administrator authentication procedure through administrator identification (ID) information. In this case, the administrator ID information is to identify the administrator and may include an administer authentication ID, a password, an administrator card, and an administrator fingerprint. The administrator ID information may be authenticated so that a general user other than the administrator cannot change the password nor register it. The password may be input through the password input unit 140 or may be input through the host devices 30 and 40.

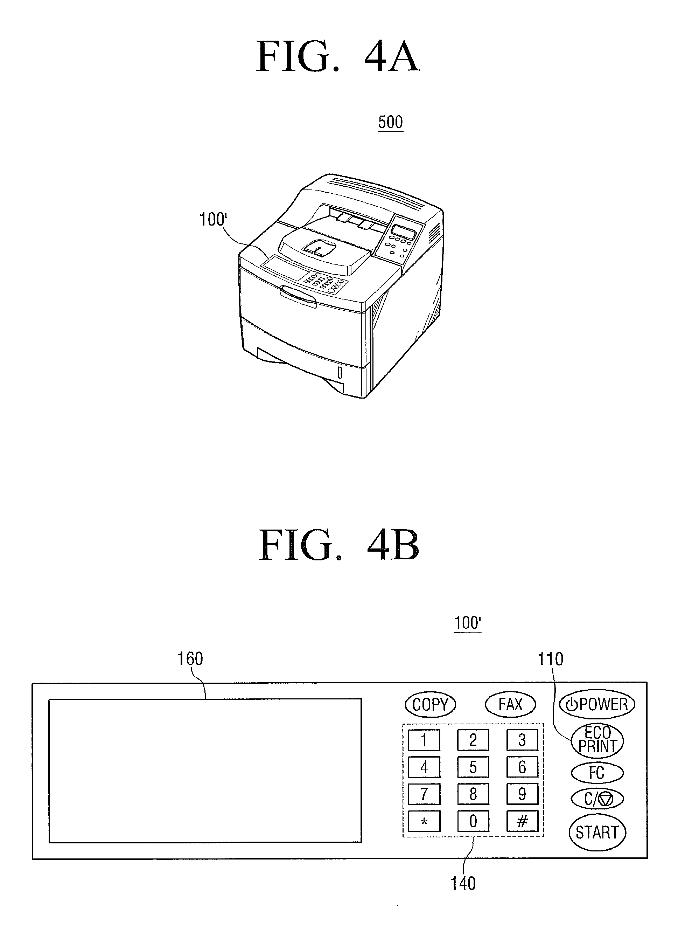

FIGS. 4A and 4B are views illustrating the image forming apparatuses shown in FIGS. 1 to 3. FIG. 4A is a view illustrating the image forming apparatus 500, and FIG. 4B is a view illustrating a user interface (UI) 100' of the image forming apparatus 500.

Referring to FIG. 4B, the UI 100' may include a button unit 110, a password input unit 140, and a display unit 160. A menu necessary for the operation of setting or inputting a password through the password input unit 140 may be displayed on the display unit 160, and the display unit 160 may be implemented as a touch screen. Various embodiments relevant thereto will be explained in detail below.

The button unit 110 can be formed as one button in an outer surface of the image forming apparatus 500. Also, the button unit 110 may be implemented as a soft type button provided in the display unit 160. For example, the button unit 110 can be formed as an economy button, such as "ECO PRINT" button, or "Eco button," so that the user may discriminate it from other buttons. The button unit 110 can be formed as a hard type button or a soft type button. The button unit 110 can include an LED to visually represent the resource saving mode. The LED can be integrally formed with the button unit 110 or separately provided in one side of the button unit 110. The LED can visually represent whether the image forming apparatus 100 is in resource saving mode, by lighting, flickering, or producing different colors.

A function button (not shown) can be provided separately from the Eco button 110. The function button may be also formed as a soft type button in the display unit 170. A function of the function button, that is, the function of displaying the preset function list, can be executed by pressing the Eco button 110 two or more times or pressing the Eco button 110 for a preset time.

Although the button unit 110 and the password input unit 140 are implemented as a button separate from the display unit 160 in FIG. 4, aspects are not limited thereto. The button unit 110 and the password input unit 140 may be implemented as a touch screen incorporated into the display unit 160. In this case, the password input unit 140 may be implemented as a soft type key board.

Also, although the button unit 110 to apply the resource saving mode is provided in the image forming apparatus 500, in some case, the button unit 110 may be implemented in the form of a menu which is displayed on a display unit (not shown) of the host device 30 and 40 through the printer driver or application of the host device 30 and 40.

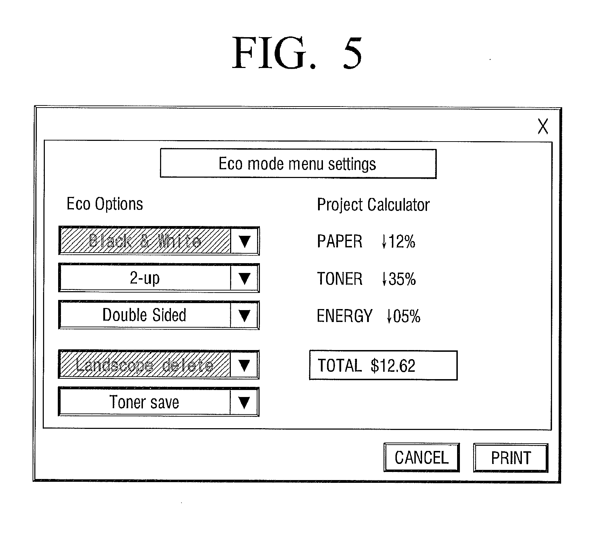

FIG. 5 illustrates sub-options corresponding to the preset function applied when the resource saving mode is selected. When the preset function applied when the resource saving mode is selected through the button unit 110 is the print option, its relevant sub-options can include the black and white print option, the double sided print option, the two pages per page (i.e., 2-up) print option, the landscape delete option, and the toner save option.

As an example and shown in FIG. 5, among the sub-options, the user's access to the black and white print option and the landscape delete option is restricted by the administrator 10, and the corresponding windows being displayed may be inactive. The user access to the other sub-options is allowed so that the user can change the application of the sub-options.

In the right side of a setting menu including the sub-options, the resource (paper, toner, and energy) saving degrees are represented using the percentage according to the current setting menu. At the bottom of the right side of the setting menu, a total save cost based on the current setting menu is represented. Based on the percentages, the administrator 10 or the user can set and/or change the application of the options in the setting menu. The setting menu can be displayed in the display unit (not shown) of the host devices 30 and 40 or the display unit 160 (shown in FIG. 2) of the image forming apparatus 100.

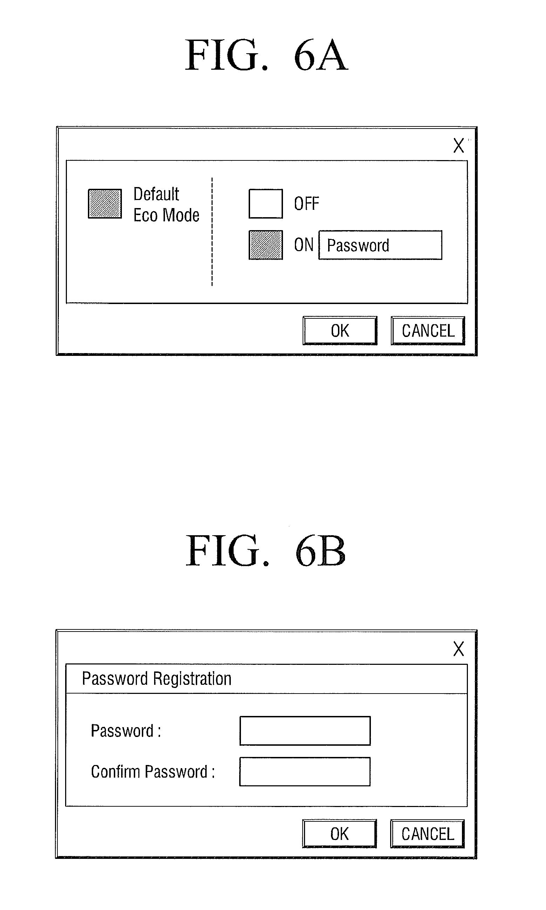

FIGS. 6A to 6C are views to explain a method for setting a password for the resource saving mode according to an exemplary embodiment of the present invention. Referring to FIG. 6A, if a password button "Password" displayed on the screen is selected to set a password for the resource saving mode, a password registration screen is displayed as shown in FIG. 6B. The administrator 10 can set a password for the entire resource saving mode in a UI of an image forming apparatus, an embedded web server, or a server for administrating a plurality of image forming apparatuses.

If the administrator 10 directly sets a password through the UI of the image forming apparatus, administrator authentication may be required so that the access of a general user is restricted. The administrator authentication may be a specific ID, password, administrator key, and/or fingerprint identification.

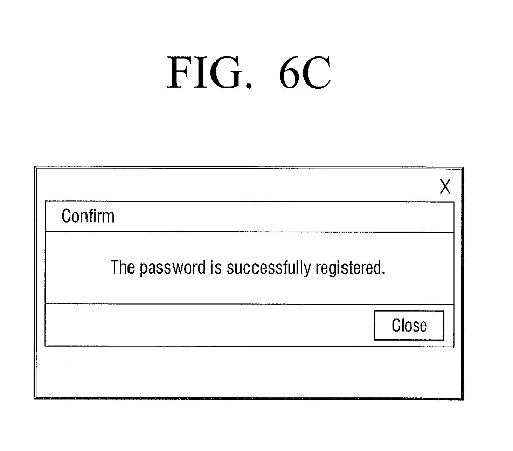

If the user inputs a password through the password registration screen shown in FIG. 6B, a window confirming that the password has been registered may be displayed as shown in FIG. 6C. The password may be input in the form of numbers, characters, or a combination of numbers and characters. In some case, the password may be input using a card key or fingerprint identification.

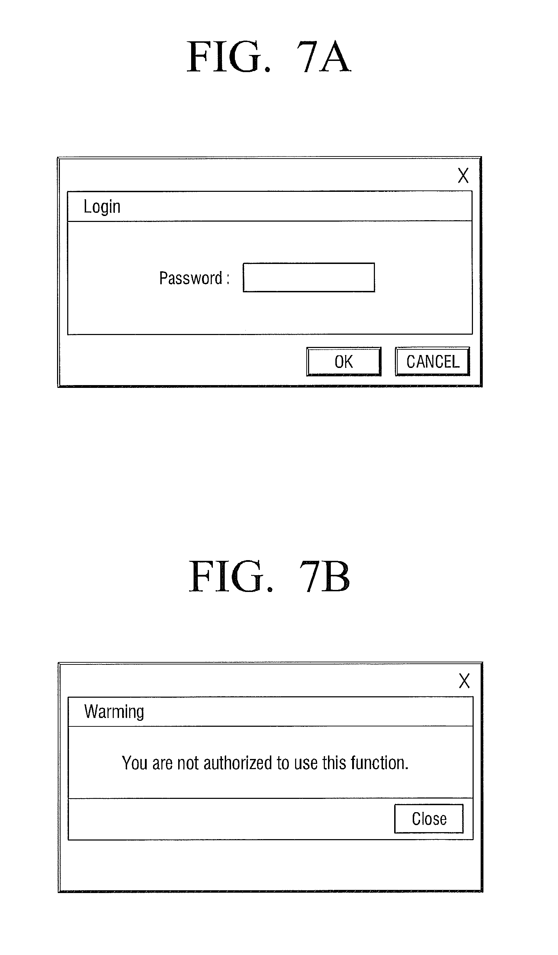

FIGS. 7A to 7B are views illustrating a method for removing the password which has been set for the resource saving mode. Referring to FIG. 7A, if the user wishes to disable the resource saving mode, for example, by re-pressing the Eco button which is active or using a menu displayed on the screen, if the user wishes to change a setting value for each option, or if the user presses a start button, an input window to input a password may be displayed. If the user inputs a correct password, the resource saving mode is disabled and the user can change the setting value. However, if the user inputs a password different from the set password, a window informing of this may be displayed as shown in FIG. 7B.

Although the resource saving mode is disabled through the image forming apparatus 500, it can be disabled through the host devices 30 and 40 (as shown in FIG. 3). For example, the user can disable the resource saving mode and change the setting value by inputting a password through a screen displayed on the host devices 30 and 40.

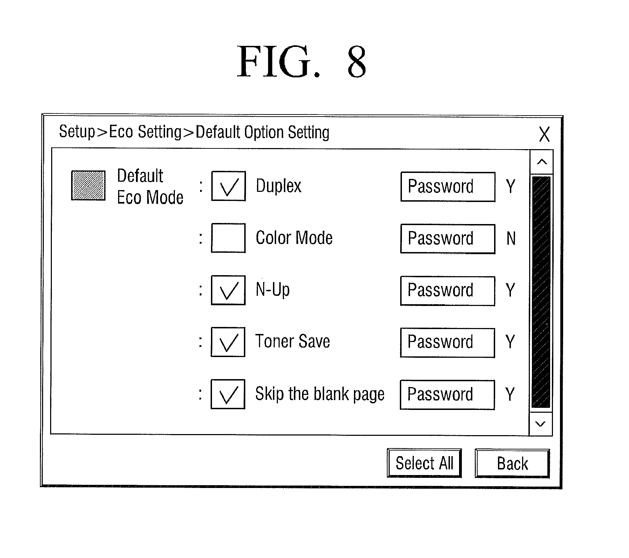

FIG. 8 is a view to explain a method for setting a password for the resource saving mode according to another exemplary embodiment of the present invention. As shown in FIG. 8, the administrator 10 may set a separate password for each function of the resource saving mode or each sub-option, rather than the all of the functions of the resource saving mode. For example, passwords are set for the double-sided print option (Duplex), the multiple pages per side print option (N-up), the toner save option (Toner Save), and the blank page delete option (Skip the blank page), whereas no password is set for the color mode option (Color Mode). Also, it is possible to set the same password for multiple options.

In this case, the method for setting a password is the same as that explained with respect to FIGS. 6A to 6C and thus a detailed description shall be omitted. Although it is possible to set a separate password for each function applied when the resource saving mode is selected or for each sub-option, the same password may be set for at least two functions or sub-options.

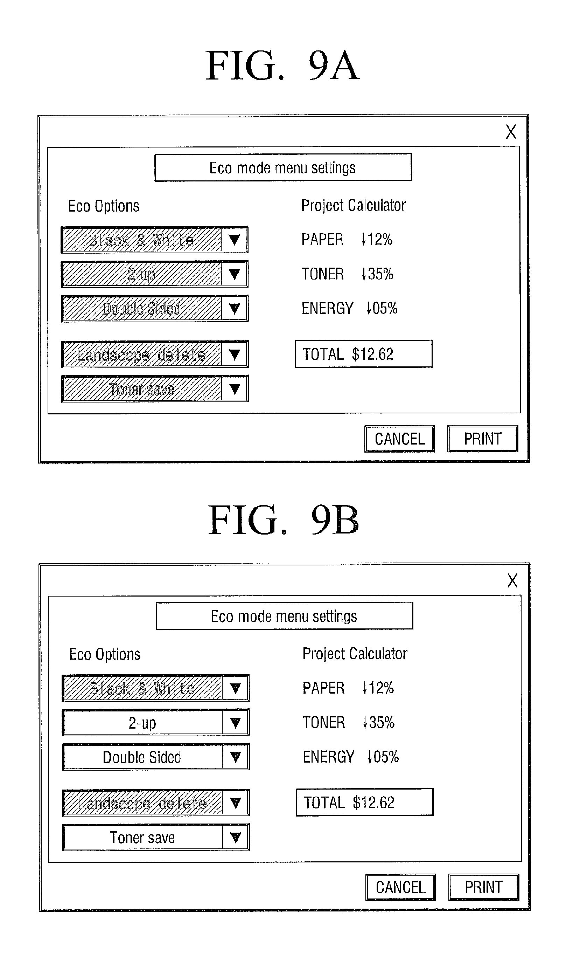

FIGS. 9A and 9B are views to explain a method for removing a password when the same password is set for at least two functions or sub-options. Referring to FIG. 9A, since all sub-options are set to be required when the resource saving mode is selected, their relevant menus are inactive.

Referring to FIG. 9B, the options "2-up," "Double Sided," and "Toner Save," for which the same password is set become active when the user inputs the password, so that the user can change the setting value. Setting a password for the entire resource saving mode and setting a password for each function or sub-option may be performed separately or simultaneously. That is, although the administrator 10 can select the case in which a password is set for the entire resource saving mode or the case in which a password is set for each function or sub-option, it is also possible to select both cases. Even if both cases are selected, a password authentication function may be set to be applied to only one of the cases or may be set to be applied to the both cases. Also, there may a case in which a password is set for each function (print function or copy function, for example) but no password is set for each sub-option (color mode or toner save, for example). There may be a case in which a password is set for both the function and the sub-option.

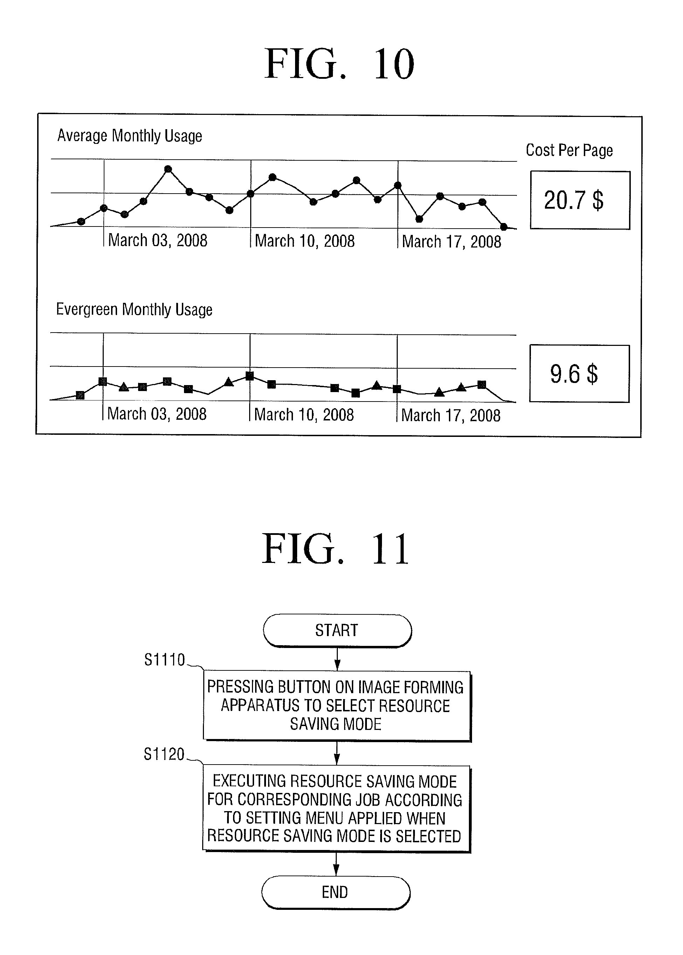

FIG. 10 depicts a feed back effect according to an exemplary embodiment of the present invention. The effects of the resource saving mode, for example, the cost per page of a general image forming apparatus (Average Monthly Usage) and the image forming apparatus in the resource saving mode (Evergreen Monthly Usage) can be provided to the user. Also, the result of saving obtained by applying the resource saving mode may be provided to the user for each job, period, or date on a real time basis. Hence, the feedback effects of the resource saving function can be provided to the user.

FIG. 11 is a flowchart showing a control method of the image forming apparatus according to an exemplary embodiment of the present invention. According to the method for controlling the preset function of the image forming apparatus which supports the resource saving mode including at least one function in FIG. 11, when the button of the image forming apparatus is pressed to select the resource saving mode in operation S1110, the resource saving mode is executed by applying the preset function associated with the button in operation S1120.

Herein, the preset function can be set as default in the manufacture of the image forming apparatus or can be set by the administrator. Alternatively, the user can edit the preset function. The preset function includes at least one sub-option as described above. The application or the access of the at least one sub-option can be set and changed by the administrator as described above. Herein, the administrator represents the network administrator, such as a company, as described above.

When the preset function is the print option, its sub-option can include at least one of the double sided print option, the multiple pages per side print option, the black and white print option, the toner save option, the batch output option, the blank page delete option, the landscape delete option, and the auto power on/off option, as described above. By manipulating the single button provided in the button unit 110, the sub-options can be provided to the user as an optimum combination within the range not affecting the user's necessity.

Further, the attribute value of the at least one sub-option of the preset function can be set by default as described above. The attribute value of the at least one sub-option of the preset function is changeable by the user or the administrator as described above. When the user alters the attribute value of the at least one sub-option accessible by the user, the changed value has priority over the default value in the corresponding job as described above. The button disposed in the image forming apparatus for selecting the resource saving mode can include an LED which visually represents the application of the resource saving mode.

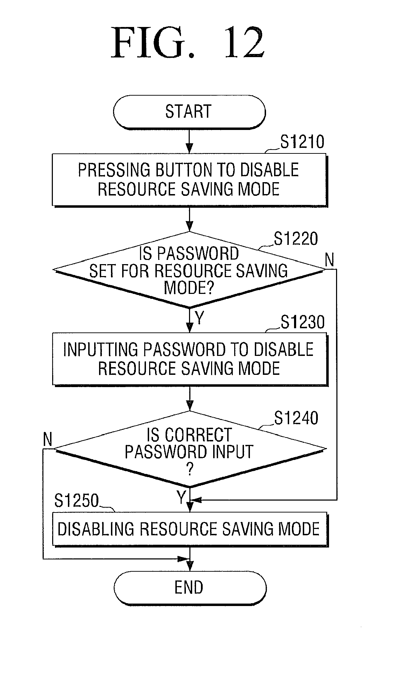

FIG. 12 is a flowchart showing a control method of the image forming apparatus according to another exemplary embodiment of the present invention. According to the method to control the image forming apparatus which supports the resource saving mode including at least one function in FIG. 12, when the "Eco button" to apply the resource saving mode is active, the "Eco button" is selected to disable the resource saving mode in operation S1210. However, this is merely an example. In order to change a setting value for each function to which the resource saving mode is applied, operation of disabling the resource saving mode may be required. Also, the method for disabling the resource saving mode using the menu displayed on the display unit 170 may be used.

If a password has been set for the resource saving mode in operation S1220:Y, an input window to request a password to be input may be displayed. Accordingly, a password to disable the resource saving mode is input in operation S1230.

If no password has been set for the resource saving mode in operation S1220:N, the resource saving mode is disabled in operation S1250 or not according to whether the resource saving mode is set by default or set temporarily.

If a correct password is input in operation S1240:Y, the resource saving mode can be disabled in operation S1250. However, if a separate password is set for each function or sub-option, the password corresponding to each function or sub-option should be input to activate/deactivate the function even if the resource saving mode is entirely disabled. Also, the password set for the entire resource saving mode may be the same as that set for some function or sub-option. In this case, only the function or sub-option for which the same password is set is disabled when the entire resource saving mode is disabled.

If an incorrect password is input in operation S1240:N, a window informing of the incorrect password being input is displayed and the resource saving mode is not disabled.

In the case that user authentication for the image forming apparatus or each function (print, copy, or fax function) overlaps user authentication for the resource saving mode, if the user authentication is passed, the authentication for the resource saving mode may be omitted. Also, it is possible to set the user authentication and the authentication for the resource saving mode to be individually applied.

Although a few embodiments of the present invention have been shown and described, it will be appreciated by those skilled in the art that changes may be made in these embodiments without departing from the principles of the present invention, the scope of which is defined in the appended claims.

## Claims

1. An image forming apparatus to support a resource saving mode, the image forming apparatus comprising:
a button to select the resource saving mode;
a storage unit to store a preset function applied when the resource saving mode is selected; and
a controller to execute the resource saving mode by applying the preset function to a corresponding job when the button is pressed, wherein the preset function is set by default or editable.

2. The image forming apparatus of claim 1, wherein the preset function comprises at least one of a print option, a scan option, a copy option, and a fax option.

3. The image forming apparatus of claims 1 or 2, wherein, if a password is set for the resource saving mode, the controller authenticates the password and executes the resource saving mode according to a result of authentication.

4. The image forming apparatus of claims 3, wherein the password is set for each preset function applied in the resource saving mode or each sub-option of the preset function.

5. The image forming apparatus of claims 3 or 4, wherein the execution of the resource saving mode according to a result of authentication is applied to at least one preset function or at least one sub-option of the preset function for which the same password as the input password is set.

6. A preset function control method of an image forming apparatus which supports a resource saving mode, the method comprising:
pressing a button to select the resource saving mode; and
when the button is pressed, executing the resource saving mode by applying a preset function to a corresponding job, wherein the preset function is set by default or editable.

7. The preset function control method of claim 6, wherein the button is disposed in either the image forming apparatus or a host device connected to the image forming apparatus.

8. The preset function control method of claims 6 or 7, further comprising:
pressing a function button to select a preset function list; and
when the function button is pressed, displaying the preset function list.

9. The preset function control method of any one of claims 6 to 8 , wherein the preset function comprises at least one of a print option, a scan option, a copy option, and a fax option.

10. The preset function control method of any one of claims 6 to 8, wherein an attribute value applied to at least one sub-option of the preset function is set by default, and when the attribute value applied to the at least one sub-option is changed by a user, the changed value has priority over the default value in a corresponding job.

11. The preset function control method of any one of claims 6 to 8, further comprising setting a password for the resource saving mode, wherein an input password is authenticated and the resource saving mode is executed according to a result of authentication.

12. The preset function control method of claim 11, wherein the password is set for each preset function applied in the resource saving mode or each sub-option of the preset function.

13. The preset function control method of claim 12, wherein the execution of the resource saving mode according to a result of authentication is applied to at least one preset function or at least one sub-option of the preset function for which the same password as the input password is set.

14. The preset function control method of claims 12 or 13 wherein the password is input through a UI of the image forming apparatus or received from a host device.

15. The preset function control method of claims 12 or 13, wherein if a user authenticating function is set separately from a password setting function for the resource saving mode, password authentication for the resource saving mode is omitted when user authentication is established.
